# EUROPEAN PATENT SPECIFICATION

(11) **EP 0 748 588 B1**
(45) Date of publication and mention of the grant of the patent: **11.10.2000**
(21) Application number: 96201301.7
(22) Date of filing: 13.05.1996
(51) Int. Cl.: A01N 43/90, A23B 4/22, A23B 7/155, A23C 19/11, A23C 19/16, A23L 3/3463

(54) **Fungicide compositions**
Fungizide Zusammensetzungen
Compositions fongicides

(30) Priority: 12.05.1995 EP 95201248
(43) Date of publication of application: 18.12.1996
(73) Proprietor: DSM N.V., 6411 TE Heerlen (NL)
(72) Inventor: Stark, Jacobus, 3069 ZM Rotterdam (NL)
(74) Representative: Matulewicz, Emil Rudolf Antonius, Dr.

(56) References cited:
- EP-A- 0 091 503
- EP-A- 0 101 102
- EP-A- 0 513 922
- EP-A- 0 608 944
- WO-A-91/02518
- WO-A-95/08918
- DATABASE CABA CAB International (CABI) AN 77:62658, J.M. VAN TUYL: "Genetics of fungal resistance to systemic fungicides" XP002013755 & MEDEDELINGEN, LANDBOUWHOGESCHOOL WAGENINGEN, vol. 77, no. 2, 1977, page 136
- PESTICIDE SCIENCE, vol. 15, no. 1, February 1984, pages 85-89, XP002013754 P. LEROUX AND MICHEL GREDT: "Resistance to Fungicides which Inhibit Ergosterol Biosynthesis in Laboratory Strains of Botrytis cinerea and Ustilago maydis"

## Description

The present invention relates to antifungal compositions and use of such compositions to treat foods such as cheeses and sausages, feed products, crops and agricultural products such as fruits, grain, seed-potatoes, plants, flowers, flower bulbs, seeds and vegetables. Compositions of the invention can also be used for pharmaceutical purposes. Also said products treated with compositions of the invention are disclosed.

### Background of the invention

### Natamycin

For more then 20 years natamycin has been used to prevent fungal growth on cheeses and sausages (ref 1-12 and 18).

Cheeses are treated by immersion in a suspension of natamycin in water or covered by an emulsion of a polymer in water, mostly polyvinyl acetate. Sausages are mainly treated by immersion or by spray coating with a suspension of natamycin in water. Usually aqueous suspensions for immersion treatments contain 0.1% to 0.2% w/v of natamycin, while polymer emulsions for coating purposes contain 0.01% to 0.05% w/v of natamycin.

Mostly these treatments are highly effective in preventing fungal growth on the surface of cheeses and sausages. However because of the low solubility of natamycin, mould species which are less susceptible to natamycin are sometimes not fully inhibited. Thus some fungal spoilage may still occur. Examples of fungal species which exhibit relatively high tolerance towards natamycin are Verticilium cinnabarinum, Botrytis cinerea and Trichophyton species. Among Aspergillus, Fusarium and Penicillium species may also be found species with this characteristic. An example of a species which sometimes causes mould problems in the cheese industry is Penicillium echinulatum var. discolor.

Because of the low solubility of natamycin a food product treated with this antimycotic will be protected against fungal growth for a long period. Only the natamycin which is in solution will be available to exert anti-fungal activity.

Natamycin has a MIC (Minimal Inhibitory Concentration) of less than 10 ppm for most foodborn fungi, while its solubility in water is from 30 to 50 ppm (ref. 12). After many years of continuous use of this antimycotic, natamycin-resistant fungi have never been found (ref. 13). So under normal conditions natamycin will protect food products like cheese fully against fungal spoilage.

However sometimes the amount of fungi in for example a cheese factory is high. In these circumstances, the dissolved fraction of natamycin in a conventional natamycin-containing antifungal composition could be insufficient to prevent fungal growth on cheese. In this case always the more tolerant mould species will grow on natamycin treated food products, especially when the conditions in production or storage factories are relatively optimal for fungal growth. An example of an important factor which enhances the probability of fungal growth is an insufficient control of the relative humidity.

In case of spoilage by moulds the economic losses can be considerable and a more efficient antifungal system is necessary to protect food products such as cheese against spoilage by relatively natamycin-tolerant mould species.

An example of such an antifungal system is the combination of natamycin, an acidic antifungal compound and an additional acid compound (ref. 14).

### Imazalil

[1-[2-(2,4-dichlorophenyl)-2-(2-propenyloxy)- ethyl]-I-H-lmidazole] (imazalil or enilconazole) is a broad spectrum antimycotic (ref. 15-16), which is used for the protection of crops, like for example strawberries, gherkins, cucumbers, melons, plants and flowers. Imazalil is also used to prevent fungal growth on seeds, seed-potatoes and fruits such as citrus fruits, bananas, etc.

The inhibition of moulds on cheese by polyethylene films containing the antimycotic imazalil has been described by Weng and Hotchkiss (ref. 17). They described the inhibition of mould growth on the surface of Cheddar cheese by a packaging film containing imazalil. However in practice imazalil is not suitable for products which have to be protected against fungal growth on the surface for long periods. Examples of such products are cheeses and . sausages. Imazalil quickly penetrates into the cheese which means that after several days no antifungal activity is left at the site where fungal growth occurs: the surface of the food product.

In summary: natamycin provides an effective means of controlling common food spoilage fungi, but is insufficiently soluble in water to inhibit more tolerant species if they are present in large amounts; imazalil is not suitable for the long term protection of food products such as cheeses and sausages against fungal growth, because the compound penetrates quickly into the product.

### Description of the invention

The present invention relates to antifungal compositions, which comprise an antifungal agent of the polyene type, such as natamycin, and an antifungal agent of the imidazole type, such as imazalil.

Unexpectedly it has been found that the action towards fungal species of a polyene antifungal agent, in particular natamycin, is markedly enhanced when an imidazole antifungal agent, in particular imazalil, is added.

Only the natamycin which is in solution will be available to exert antifungal activity. In the case of a fungicide, e.g. natamycin, with a low solubility one of the factors which will have an influence on the final fungicide effect is the elimination of the dissolved fungicide. When natamycin interacts with a fungal cell the reaction is irreversible which means that the natamycin is not available for the elimination of other fungal cells anymore. In most cases the availability of natamycin will not be limited significantly by solubilisation or diffusion factors, because the solubility is far higher than the MIC value. Elimination of dissolved natamycin will be compensated sufficiently by dissolution of undissolved natamycin and by diffusion of dissolved natamycin to the site of infection.

However when a very high amount of fungal cells is present, the dissolution of the natamycin and the diffusion of the antimycotic to the site of infection may have a limiting effect on the inhibitory activity of the antimycotic. The amount of active (dissolved) antimycotic may drop beneath the effective concentration to prevent fungal growth. In these circumstances,if also the conditions are optimal for fungal growth, fungi with relatively low susceptibility to polyene fungicides, for example Penicillium echinulatum var. discolor, could grow on for example the surface of cheeses.

When employed as an antifungal agent in conventional manner, the availability of imazalil is higher than the availability of natamycin. The solubility of imazalil is higher than the solubility of natamycin which means that the dissolution of the fungicide and the diffusion of the dissolved fungicide to the site of infection have less influence on the availability of imazalil. However imazalil will penetrate rather quickly into the product, e.g. cheese, which means that after a few days no antifungal activity is left on the surface of the product.

The enhanced activity of an antifungal composition of the present invention is presumably due to the combined effect of the prolonged working time of the polyene antifungal agent, e.g. natamycin, and the high availability in the short term of the imidazole antifungal agent, e.g. imazalil. The combination of both antimycotics will protect products, e.g. cheese, more effectively against fungal spoilage.

According to one aspect of the invention, an antifungal composition is provided wherein the active component comprises an antifungal amount of a polyene antifungal agent, e.g. natamycin, in combination with an antifungal amount of an imidazole antifungal agent, e.g. imazalil.

In a further aspect, the invention also provides use of a polyene antifungal agent, e.g. natamycin, and an imidazole antifungal agent, e.g. imazalil, in combination to treat a foodstuff such as cheese or sausage, a feed product, or an agricultural product such as fruit, (kernel) grain, seed-potato, plant, flower, flower bulb, seed or vegetable, wherein said antifungal agents are applied to the surface of the product to be treated either simultaneously or sequentially to provide at said surface a composition of the invention. Thus, for example, an imidazole antimycotic may be applied to the surface to be treated first followed by application to the same surface of a polyene antimycotic. Preferably, however, the polyene antifungal agent and imidazole antifungal agent will be employed in the form of a single composition.

Thus, the treatment may comprise immersing the product to be treated in a liquid composition of the invention or such a composition may be sprayed onto the product.

An antifungal composition of the invention may be any kind of composition known to be suitable for treating a food or agriculture product. Particularly preferred are emulsions prepared from coating emulsions commonly employed in the food industry. For example for the treatment of cheeses an aqueous polymer emulsion of the polyvinyl acetate type, which can be applied by brushing or with a spray device, may be used. Examples of polyvinyl acetate coatings are Plasticoat® and Ceska®. A composition of the invention may also be in the form of a coating emulsion of the oil in water or water in oil type. For example suitable preparations for treating agricultural products such as fruits are for instance films of polymeric materials such as for example polyolefins, e.g. polyethylene and polypropylene.

Further the invention provides foodstuffs such as cheeses and sausages, feed products and agricultural products such as fruits, (kernel) grain, seed-potatoes, plants, flowers, flower bulbs, seeds and vegetables coated with a composition of the invention.

It will be appreciated that compositions of the invention additionally include pharmaceutical preparations, for instance for topical application. Examples of suitable pharmaceutical preparations are lotions, creams and ointments.

The polyene antifungal agent in a composition of the invention may be, for example natamycin, nystatin, lucensomycin or amphotericin B. The preferred polyene is natamycin. It will be appreciated that commercial products which contain natamycin such as Delvocid® can be incorporated in a composition of the invention. Delvocid® is the brand name of a commercial product produced by Gist-Brocades (The Netherlands). Delvocid® contains 50% of natamycin.

The imidazole antifungal agent in a composition of the invention may be, for example, imazalil, an imazalil salt, a derivative of imazalil or miconazole. The preferred imidazole is imazalil. Commercial products which contain imazalil such as Fungaflor® or Fungazil® (Janssen Pharmaceutica NV, Belgium) can be used in the formulation of composition of the invention.

A composition of the present invention will generally comprise from 0.005% to 2% by weight of a polyene fungicide, e.g. natamycin.

The amount of polyene fungicide in a liquid composition of the invention for an immersion or spraying treatment may be from 0.01% to 2% w/v. Preferably the amount is from 0.01% to 1% w/v. In principle the immersion liquid may be of any kind. When an aqueous system is used, the addition of a surfactant may be of advantage, in particular for treating objects with a hydrophobic surface. Useful surfactants are for example anionic tensides such as sodium lauryl sulphate or polyethylene alkyl ethers such as Cetomacrogol® 1000 or polyoxyethylene ethers e.g. Tween® 60, 61 and 65.

In a coating emulsion according to the invention, the amount of polyene fungicide may be from 0.005% to 2% w/v, preferably from 0.01% to 1% w/v and more preferably from 0.01% to 0.5% w/v.

Depending on the type of application the amount of imidazole fungicide, e.g. imazalil, may vary from 0.005% to 3% w/v, preferably from 0.005% to 1% w/v.

Preferably the pH of a composition according to the invention is from 1 to 10, more preferably from 2 to 8 and most preferably from 3.5 to 7.5. The pH of such a composition may be adjusted by any method, e.g. by adding an acidic or a basic compound. Useful acids for this purpose are for example citric acid, lactic acid, hydrochloric acid, phosphoric acid, sulphuric acid and tartaric acid. Useful basic compounds for adjusting the pH of a composition of the invention are for example sodium hydroxide, potassium hydroxide, ammonia and calcium hydroxide. Useful buffering systems which may be employed in compositions of the invention are for instance those of the phosphate and citrate types.

### COMPARATIVE EXAMPLE 1

This example illustrates the effect towards Penicillium echinulatum var. discolor on cheese of imazalil.

A freshly brined wheel of Gouda cheese was first cut horizontally into two parts. Each part was then cut into pieces of 5 by 5 cm. Only pieces with a flat original surface were taken for the experiment. The pieces of cheese were dipped into a bath of melted paraffin at 80°C in such a manner that the original surface area remained free of paraffin, while the other five surfaces were covered by a thin film of solidified paraffin.

The original surface area (the rind) was then inoculated with about 6 x 10³ CFU (Colony Forming Units) per cm² of a mixture of spores of three strains of Penicillium echinulatum var. discolor (CBS numbers 611.92, 612.92 and 613.92, deposited on December 8, 1992 with the CBS). The inoculation was performed bv applying 0.15 ml of a spore suspension containing about 10⁶ CFU/ml to the surface of the piece of cheese. The inoculum was evenly divided over the surface by means of a sterile swab, which was saturated with the original spore suspension.

Plasticoat® compositions with the following concentrations of imazalil were prepared: 0 ppm, 50 ppm and 100 ppm. Plasticoat® is an aqueous emulsion of polyvinyl acetate acquired from National Starch & Chemical B.V., which is used as a cheese coating.

After standing overnight in closed plastic boxes at about 6°C, the pieces of cheese were treated with the Plasticoat® compositions. For each treatment 2 pieces of cheese were taken. On each piece 0.8 ml of the Plasticoat® composition was applied and evenly spread over the surface of the cheese by means of a sterile rectangular piece of plastic spatula of about 2 by 5 cm.

After standing for 2 hours at ambient conditions the pieces of cheese were incubated at 15°C and at a relative humidity of 95 %.

During 14 days, every day the number of visible colonies formed on the pieces of cheese were counted. When the number of colonies on a piece of cheese exceeded 50, the piece of cheese was considered to be totally covered with mould.

The pieces treated with Plasticoat® compositions containing no imazalil remained free of mould during 5 days and were totally covered with mould on day 6.

The pieces which were treated with Plasticoat® compositions containing 50 ppm of imazalil remained free of mould during 8 days and were totally covered with mould on day 9.

The pieces which were treated with Plasticoat® compositions containing 100 ppm of imazalil remained free of mould during 11 days and were totally covered with mould on day 12.

These results clearly demonstrate that Plasticoat® containing 50 or 100 ppm of imazalil protects pieces of cheese respectively 3 and 6 days longer against growth of Penicillium echinulatum var. discolor. However, when fungal growth occurs the pieces of cheese are very quickly totally covered with mould.

### COMPARATIVE EXAMPLE 2

In the same way as described in Example 1, experiments were carried out using Plasticoat® compositions containing natamycin instead of imazalil. Plasticoat® compositions with the following concentrations of natamycin were prepared: 0 ppm, 250 ppm and 500 ppm.

The pieces treated with Plasticoat® compositions containing no natamycin remained free of mould during 5 days and were totally covered with mould on day 6.

The pieces which were treated with the Plasticoat® composition containing 250 ppm or 500 ppm of natamycin remained free of mould during 7 days. Even after 14 days, less than 50 colonies per piece of cheese were observed.

These results clearly demonstrate that Plasticoat® containing 250 ppm or 500 ppm of natamycin protects cheese up to 2 days longer against growth of Penicillium echinulatum var. discolor. More important is that these results demonstrate that when fungal growth occurs on pieces of cheese which are treated with Plasticoat® containing 250 or 500 ppm of natamycin the number of colonies per piece of cheese is always less than 50 even after many days, e.g. 14.

### EXAMPLE 3

In the same way as described in Example 1, experiments were carried out using Plasticoat® compositions containing both imazalil and natamycin in the following concentrations:
* 250 ppm of natamycin and 50 ppm of imazalil
* 250 ppm of natamycin and 100 ppm of imazalil
* 500 ppm of natamycin and 50 ppm of imazalil
* 500 ppm of natamycin and 100 ppm of imazalil

The pieces treated with Plasticoat® compositions containing no imazalil and no natamycin remained free of mould during 5 days and were totally covered with mould on day 6.

On all the pieces treated with the different combinations of natamycin and imazalil described above after 14 days less than 50 colonies per piece were observed.

The pieces treated with the different Plasticoat® compositions remained free of mould during respectively 9, 11, 9 and 12 days.

These results clearly demonstrate that a combination of natamycin and imazalil is very effective in protecting cheese against growth of Penicillium echinulatum var. discolor.

When compositions as listed above are used on pieces of cheese, the cheese is never totally covered with mould even after 14 days (compare with the results of Example 1: pieces of cheese treated with imazalil are always totally covered with mould) and the pieces of cheese remain 1 to 5 days longer free of mould compared with pieces which are treated with imazalil or natamycin alone (compare with the results of Examples 1 and 2). Therefore the combination of imazalil and natamycin provides for an extended antifungal action.

### COMPARATIVE EXAMPLE 4

The experiment as described in Example 1 was repeated except that the number of visible colonies was counted during 32 days and the pieces of cheese were inoculated with a spore suspension of Aspergillus versicolor (CBS 434.73) instead of a mixture of spores of three strains of Penicillium echinulatum var. discolor. Asperoillus versicolor is an example of a species which is normally susceptible to the action of natamycin.

The different compositions used for the treatments were:
- blank Plasticoat®
- Plasticoat® with 50 ppm of imazalil
- Plasticoat® with 100 ppm of imazalil
- Plasticoat® with 500 ppm of imazalil
- Plasticoat® with 500 ppm of natamycin.

The pieces of cheese treated with blank Plasticoat® remained free of mould during 7 days and were totally covered with mould on day 8.

The pieces of cheese treated with Plasticoat® containing 50, 100 and 500 ppm of imazalil remained free of mould during respectively 14, 15 and 17 days and were totally covered with mould on respectively day 15, 16 and 18.

On the pieces of cheese treated with Plasticoat® containing 500 ppm of natamycin, mould growth was not observed even after 32 days.

These results clearly demonstrate that towards a species which is normally susceptible to the action of natamycin a composition according to the invention will have no additional advantage in comparison to conventional treatment with natamycin alone. Maximum protection against fungal spoilage can be reached by using natamycin alone.

These results also clearly demonstrate that imazalil alone, even at very high concentrations, will not prevent spoilage by fungal species. Imazalil penetrates into the cheese and will not prevent fungal growth at the surface of the cheese, even when used at very high concentrations.

### REFERENCES

1. Jedrychowski, L.; Reps, A.; Jarmul, I.; Babuchowski, A. "Use of natamycin for a protection of semihard cheeses against moulding".
   Brief communications of the XXIII International Dairy Congress, Montreal, October 8-12, 1990, Vol. I.
2. Daamen, C. B.G. and Berg, G. van den;
   "Prevention of mould growth on cheese by means of natamycin".
   Voedingsmiddelentechnologie, 18 (2), 26-29, (1985).
3. Neviani, E.; Emaldi, G.C.; Carini, S.;
   "Use of pimaricin as a fungicide on cheese rind: technology and the effects on the cheese surface flora". Latte, 6 (5), 335-343, (1981).
4. Morris, H.A.; Castberg, H.B.;
   "Control of surface growth on Blue cheese using pimaricin". Cultured Diary Products Journal, 15 (2), 21-23, (1980).
5. Baldini, P.; Palmia, F.; Raczynski, R.G.; Campanini, M.; "Use of pimaricin for preventing mould growth on Italian cured meat products". Industria Conserve, 54 (4), 305-307, (1979).
6. Weiss, G.; "Preservation of dairy products with chemicals". Deutsche Molkerei Zeitung 91 (50), 2351-2356, (1970).
7. Holley, R.A.; "Effect of sorbate and pimaricin on surface mould and ripening of Italian dry salami"
   Lebensmittel Wissenschaft und Technologie 19 (1), 59-65, (1986).
8. Ruig, W.G.; Berg, G. van den; "Influence of the fungicides sorbate and natamycin in cheese coatings on the quality of the cheese".
   Netherlands Milk and Dairy Journal, 39 (3), 165-172, (1985).
9. Holley, R.A.; "Prevention of surface mould growth on Italian dry sausage by natamycin and potassium sorbate". Applied and Environmental Microbiology, 41 (2), 422-429, (1981).
10. Lueck, H.; Cheesman, C.E.; "Mould growth on cheese as influenced by pimaricin (natamycin) or sorbate treatments". South African Journal of Dairy Technology, 10 (3), 143-146, (1978).
11. Verma, H.S.; Yadav, J.S.; Neelakantan, S.;
   "Preservative effect of selected antifungal agents on butter and cheese". Asian Journal of Dairy Research 7 (1), 34-38, (1988).
12. Brik, H.; "Natamycin". Analytical Profiles-of Drug Substances 10, 513-561, (1981).
13. De Boer, E.; Stolk-Horsthuis, M.; "Sensitivity to natamycin (pimaricin) of fungi isolated in cheese warehouses". J. of Food Prot. 40, 533-536, (1977).
14. Van Rijn, F.T.J.; Tan, H.S.; Warmerdam, M.J.M.;
   "A fungicide composition to prevent the growth of mould on foodstuffs and agricultural products"
   European Patent Application No. 93200220, (1994).
15. Siegel, M.R.; Ragsdale, N.N.; "Antifungal mode of action of imazalil". Pesticide Biochem. Physiol. 9, 48-56, (1978).
16. Van Gestel, J.F.E.; Duytschaever, B.D.M.;
   "Preventing fungal decay of food products, particularly harvested fruits". European Patent Specification No. 83200856.9, (1988).
17. Weng, Y.M.; Hotchkiss, J.H.; "Inhibition of surface molds on cheese by polyethylene film containing the antimycotic imazalil". J. of Food Prot. 55, 367-369, (1992).
18. EP-A-513922 "Coating for foods and agricultural products to prevent the growth of moulds".

## Claims

1. An antifungal composition wherein the active component comprises an amount of a polyene antifungal agent and 0.005% to 3.0% w/v of an imidazole antifungal agent.

2. A composition as claimed in claim 1, wherein said polyene antifungal agent is natamycin.

3. A composition as claimed in claim 1 or claim 2, wherein said imidazole antifungal agent is imazalil.

4. A composition as claimed in any one of claims 1 to 3 which is in the form of an aqueous emulsion of polyvinyl acetate suitable for coating a food product.

5. A composition as claimed in claim 4, wherein natamycin is present at a concentration of 10-800 ppm and imazalil is present at a concentration of 10-500 ppm.

6. Use of an antifungal composition according to claim 1 for treating a food product, feed product or agricultural product, wherein said antifungal agents are applied to the surface of the product.

7. A food product, feed product or agricultural product coated with a composition as claimed in any one of claims 1 to 5.

8. A composition according to claim 1 for use as a pharmaceutical composition.

## Patentansprüche

1. Zusammensetzung zur Pilzbekämpfung, worin die aktive Komponente eine Menge eines Polyen-Pilzbekämpfungsmittels und 0,005 bis 3,0 % (Gewicht/Volumen) eines Imidazol-Pilzbekämpfungsmittels enthält.

2. Zusammensetzung nach Anspruch 1, worin das Polyen-Pilzbekämpfungsmittel Natamycin ist.

3. Zusammensetzung nach Anspruch 1 oder 2, worin das Imidazol-Pilzbekämpfungsmittel Imazalil ist.

4. Zusammensetzung nach einem der Anspüche 1 bis 3, die in Form einer wässrigen Emulsion eines Polyvinylacetats vorliegt, welche für die Beschichtung eines Nahrungsmittelprodukts geeignet ist.

5. Zusammensetzung nach Anspruch 4, worin das Natamycin in einer Konzentration von 10-800 ppm und das Imazalil in einer Konzentration von 10-500 ppm vorliegen.

6. Verwendung einer Zusammensetzung zur Pilzbekämpfung nach Anspruch 1 beim Behandeln eines Nahrungsmittelprodukts, eines Futterprodukts oder eines landwirtschaftlichen Produkts, worin die Mittel zur Pilzbekämpfung auf die Oberfläche des Produkts aufgebracht werden.

7. Nahrungsmittelprodukt, Futterprodukt oder landwirtschaftliches Produkt, das mit einer Zusammensetzung gemäß einem der Ansprüche 1 bis 5 beschichtet ist.

8. Zusammensetzung nach Anspruch 1 zur Verwendung als pharmazeutische Zusammensetzung.

## Revendications

1. Composition antifongique dans laquelle le composant actif comprend une quantité d'un agent antifongique polyène et de 0,005 % à 3,0 % p/v d'un agent antifongique imidazole.

2. Composition selon la revendication 1, dans laquelle ledit agent antifongique polyène est la natamycine.

3. Composition selon la revendication 1 ou la revendication 2, dans laquelle ledit agent antifongique imidazole est l'imazalil.

4. Composition selon l'une quelconque des revendications 1 à 3, qui est sous la forme d'une émulsion aqueuse de poly(acétate de vinyle) convenant à l'enrobage d'un produit alimentaire.

5. Composition selon la revendication 4, dans laquelle de la natamycine est présente à une concentration de 10 à 800 ppm et de l'imazalil est présent à une concentration de 10 à 500 ppm.

6. Utilisation d'une composition antifongique selon la revendication 1 pour traiter un produit alimentaire, un aliment ou un produit agricole, dans laquelle lesdits agents antifongiques sont appliqués à la surface du produit.

7. Produit alimentaire, aliment ou produit agricole enrobé avec une composition selon l'une quelconque des revendications 1 à 5.

8. Composition selon la revendication 1, pour une utilisation en tant que composition pharmaceutique.
